# EUROPÄISCHE PATENTSCHRIFT

(11) **EP 2 081 805 B1**
(45) Veröffentlichungstag und Bekanntmachung des Hinweises auf die Patenterteilung: **23.03.2011**
(21) Anmeldenummer: 07803301.6
(22) Anmeldetag: 06.09.2007
(51) Int. Cl.: B60T 8/36, F16K 31/06, H01F 7/08

(54) **MAGNETVENTIL UND ZUGEHÖRIGE HYDRAULISCHE BREMSANLAGE FÜR KRAFTFAHRZEUGE**
SOLENOID VALVE AND ASSOCIATED HYDRAULIC BRAKING SYSTEM FOR MOTOR VEHICLES
ÉLECTROVANNE ET SYSTÈME DE FREINAGE HYDRAULIQUE ASSOCIÉ POUR VÉHICULES AUTOMOBILES

(30) Priorität: 10.10.2006 DE 102006047923
(43) Veröffentlichungstag der Anmeldung: 29.07.2009
(73) Patentinhaber: Robert Bosch GmbH, 70442 Stuttgart (DE)
(72) Erfinder: ACAR, Sezgin, 71636 Ludwigsburg (DE); TISCHER, Michael, 74232 Abstatt (DE); KOLARSKY, Jens, 74321 Bietigheim/Bissingen (DE); HAAS, Martin, 71720 Oberstenfeld (DE); MAILAENDER, Wolfgang, 71282 Hemmingen (DE); LUDEWIG, Erich, 74321 Bietigheim-Bissingen (DE); AMBROSI, Massimiliano, 71672 Marbach (DE); PIC, Jean-Guillaume, CA-Lévis, Québec (CA); KARL, Andreas, 71672 Marbach/Neckar (DE); WEITZE, Thomas, 71701 Schwieberdingen (DE)
(86) Internationale Anmeldenummer: PCT/EP2007/059347
(87) Internationale Veröffentlichungsnummer: WO 2008/043618

(56) Entgegenhaltungen:
- WO-A-96/14227
- WO-A-2005/066982
- DE-A1- 2 036 110
- DE-A1- 19 531 010
- US-B1- 6 994 406

## Beschreibung

### Stand der Technik

Die Erfindung betrifft ein Magnetventil nach der Gattung des unabhängigen Patentanspruchs 1 und eine zugehörige hydraulische Bremsanlage für ein Kraftfahrzeug.

In der Offenlegungsschrift DE 195 31 010 A1 wird ein Magnetventil, insbesondere für eine schlupfgeregelte, hydraulische Bremsanlage in einem Kraftfahrzeug beschrieben. Das beschriebene Magnetventil weist eine Magnetbaugruppe auf, die eine Spule, einen Gehäusemantel und einen Polkern umfasst. Der Polkern ist mit einer Führungshülse für einen längsbeweglichen Anker dicht verschweißt, der bei Bestromung der Spule entgegen der Kraft einer Rückstellfeder gegen den Polkern bewegt wird, um den Fluiddurchfluss zwischen einer Einlassöffnung und einer Auslassöffnung über mindestens einen entsprechenden beweglichen Schließkörper und mindestens einen Ventilsitz einzustellen.

Im Dokument WO 96/14227 wird ein Magnetventil mit einer Magnetbaugruppe offenbart, die zum Öffnen und/oder Schließen des Magnetventils einen innerhalb einer Führungshülse längsbeweglichen Magnetanker entgegen der Kraft einer Rückstellfeder gegen einen Polkern bewegt, wobei der längsbewegliche Magnetanker und der Polkern jeweils eine Stufe aufweisen, die ineinander greifen und eine Tauchstufe bilden. Während der Bewegung wir der längsbeweglichen Magnetanker durch die Führungshülse geführt.

In der Patentschrift US 6,994406 B1 wird ebenfalls Magnetventil mit einer Magnetbaugruppe offenbart, die zum Öffnen und/oder Schließen des Magnetventils einen innerhalb einer Führungshülse längsbeweglichen Magnetanker entgegen der Kraft einer Rückstellfeder gegen einen Polkern bewegt, wobei der längsbewegliche Magnetanker und der Polkern jeweils eine Stufe aufweisen, die ineinander greifen und eine Tauchstufe bilden. Während der Bewegung wir der längsbeweglichen Magnetanker durch die Führungshülse geführt.

### Offenbarung der Erfindung

Das erfindungsgemäße Magnetventil mit den Merkmalen des unabhängigen Patentanspruchs 1 hat demgegenüber den Vorteil, dass ein innerhalb einer Führungshülse längsbeweglicher Magnetanker und ein Polkern jeweils eine Stufe aufweisen, die ineinander greifen und eine Tauchstufe bilden, wobei die längsbewegliche Magnetankerstufe und/oder die Polkernstufe geometrisch so ausgelegt sind, dass während des Betriebs ein zusammengehörendes Kantenpaar der Magnetankerstufe und der Polkernstufe stets in Überdeckung zueinander stehen, um den beweglichen Magnetanker beim Ineinandergreifen der Tauchstufe zu führen. Zudem ist die Tauchstufe zweistufig ausgeführt, d.h. die Magnetankerstufe und die Polkernstufe weisen jeweils zwei Stufen auf. Des Weiteren ist ein erster radialer Abstand der zweistufigen Tauchstufe zwischen einer ersten Stufe der Magnetankerstufe und einer ersten Stufe der Polkernstufe kleiner als ein zweiter radialer Abstand der zweistufigen Tauchstufe zwischen einer zweiten Stufe der Magnetankerstufe und einer zweiten Stufe der Polkernstufe ausgeführt. In vorteilhafter Weise ermöglicht das erfindungsgemäße Magnetventil durch die Tauchstufen eine kostengünstige Beeinflussung der Magnetkraft-Weg-Kennlinie zum Öffnen und/oder Schließen des Magnetventils, wobei ein Verhaken des Magnetankers mit dem Polkern durch die Überdeckung auf einfache Weise verhindert wird. Zudem können durch die kostengünstig umgesetzte Führung des beweglichen Magnetankers enge Toleranzanforderungen erfüllt werden, die zur Umsetzung der Magnetkraft-Weg-Kennlinienbeeinflussung erforderlich sind.

Das erfindungsgemäße Magnetventil wird in einer zugehörigen hydraulischen Bremsanlage für ein Kraftfahrzeug beispielsweise zur Schlupfregelung verwendet.

Durch die in den abhängigen Ansprüchen aufgeführten Maßnahmen und Weiterbildungen sind vorteilhafte Verbesserungen des im unabhängigen Patentanspruch 1 angegebenen Magnetventils möglich.

Besonders vorteilhaft ist, dass eine axiale Überdeckung zwischen der Magnetankerstufe und der Polkernstufe so ausgelegt ist, dass eine radiale Überdeckung vermieden wird. Zudem ist die axiale Überdeckung zwischen der Magnetankerstufe und der Polkernstufe so ausgeführt, dass die axiale Überdeckung über den vollständigen Bewegungsweg des beweglichen Magnetankers sichergestellt ist. So können beispielsweise ein radialer Abstand und/oder die axiale Überdeckung zwischen der Magnetankerstufe und der Polkernstufe in Abhängigkeit von Herstellungstoleranzen vorgegeben werden, um eine radiale Überdeckung und somit ein Verhaken des Magnetankers und des Polkerns zu vermeiden.

Vorteilhafte Ausführungsformen der Erfindung sind in den Zeichnungen dargestellt und werden nachfolgend beschrieben. In den Zeichnungen bezeichnen gleiche Bezugszeichen Elemente bzw. Komponenten, welche gleiche bzw. analoge Funktionen ausführen.

### Kurze Beschreibung der Zeichnungen

Fig. 1 zeigt eine schematische Schnittdarstellung der erfindungswesentlichen Teile eines Magnetventils.
Fig. 2 zeigt eine Darstellung eines Details D des Magnetventils aus Fig. 1.
Fig. 3 zeigt jeweils eine Magnetkraft-Weg-Kennlinie eines herkömmlichen Magnetventils und eines erfindungsgemäßen Magnetventils.

### Ausführungsformen der Erfindung

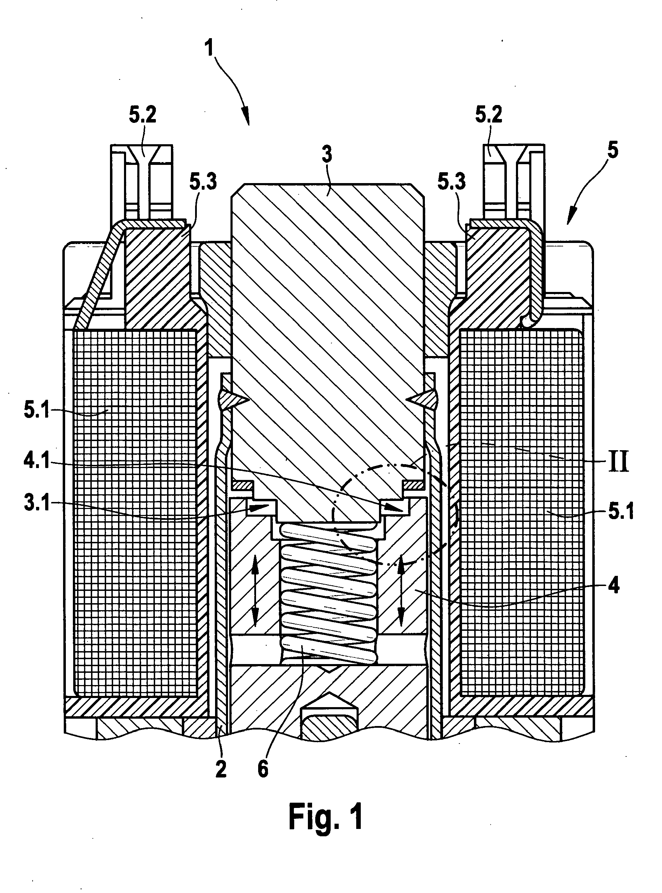

Wie aus Fig. 1 ersichtlich ist, umfasst ein erfindungsgemäßes Magnetventil 1 eine Magnetbaugruppe 5, die eine Spulenwicklung 5.1 mit elektrischen Anschlüssen 5.2 und einen Wicklungsträger 5.3 umfasst, eine Führungshülse 2, einen längsbeweglichen Magnetanker 4 und einen Polkern 3. Der Polkern 3 ist mit der Führungshülse 2 dicht verschweißt, wobei der längsbewegliche Magnetanker 4 bei einer Bestromung der Spulenwicklung 5.1 über die elektrischen Anschlüsse 5.2 innerhalb der Führungshülse 2 entgegen der Kraft einer Rückstellfeder 6 gegen den Polkern 3 bewegt wird, um den Fluiddurchfluss zwischen einer nicht dargestellten Einlassöffnung und einer nicht dargestellten Auslassöffnung über mindestens einen entsprechenden beweglichen nicht dargestellten Schließkörper und mindestens einen nicht dargestellten Ventilsitz einzustellen. Die mögliche Bewegungsrichtung des Magnetankers 4 ist in Fig. 1 durch Doppelpfeile dargestellt.

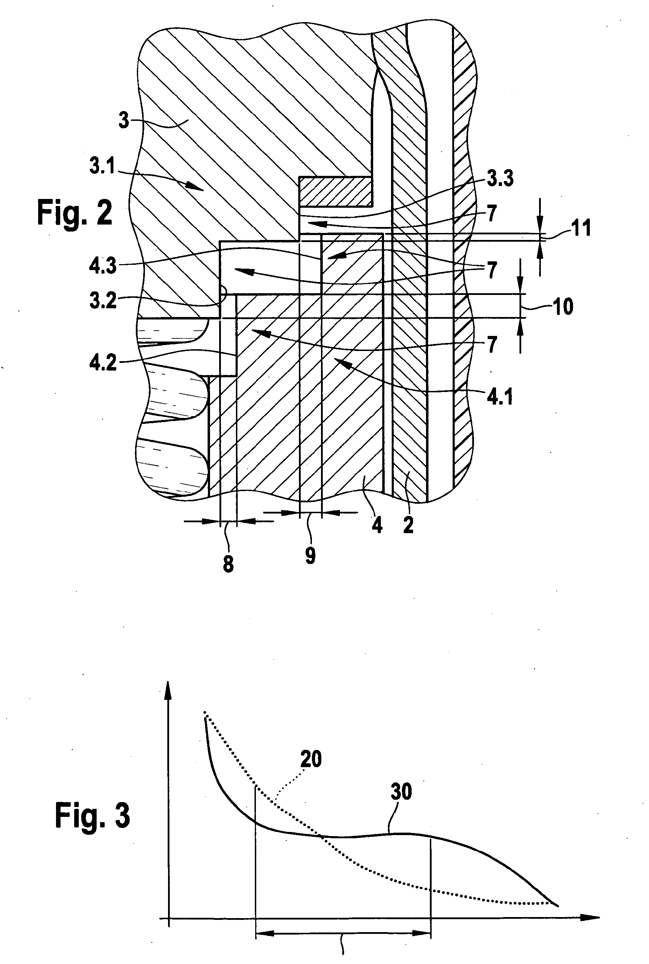

Wie weiter aus Fig. 1 ersichtlich ist, weisen der längsbewegliche Magnetanker 4 und der Polkern 3 jeweils eine Stufe 4.1, 3.1 auf, die ineinander greifen und eine Tauchstufe 7 bilden, die in Fig. 2 im Detail dargestellt ist. Die Magnetankerstufe 4.1 und/oder die Polkernstufe 3.1 sind geometrisch so ausgelegt, dass während des Betriebs ein zusammengehörendes Kantenpaar 3.2, 4.2, 3.3, 4.3 der Magnetankerstufe 4.1 und der Polkernstufe 3.1 stets in Überdeckung 10, 11 zueinander stehen, um den beweglichen Magnetanker 4 beim Ineinandergreifen der Tauchstufe 7 zu führen. Das in Fig. 1 und 2 dargestellte Ausführungsbeispiel des erfindungsgemäßen Magnetventils 1 weist eine zweistufige Tauchstufe 7 auf.

Wie aus Fig. 2 ersichtlich ist, wird die Polkernstufe 3.1 oder die Magnetankerstufe 4.1 so ausgeführt, dass zwischen der ersten Kante 3.2 der Polkernstufe 3.1 und der ersten Kante 4.2 der Magnetankerstufe 4.2 bzw. zwischen der zweiten Kante 3.3 der Polkernstufe 3.1 und der zweiten Kante der Magnetankerstufe 4.1 über den vollständigen Bewegungsweg des Magnetankers 4 eine axiale Überdeckung 10 bzw. 11 vorliegt. Das bedeutet, dass die,Tauchstufe 7 unabhängig von der Stufenanzahl mit zugehörigen Maß- und Lagetoleranzen so ausgelegt ist, dass die Durchmesser der entsprechenden zusammengehörenden Stufen niemals in Überdeckung kommen können und somit eine radiale Überdeckung der Stufen vermieden wird. Die radialen Abstände 8, 9 und/oder die axialen Überdeckungen 10, 11 zwischen der Magnetankerstufe 4.1 und der Polkernstufe 3.1 werden in Abhängigkeit von den möglichen Herstellungstoleranzen vorgegeben, so dass ein Verhaken des Magnetankers 4 mit dem Polkern 3 auch vermieden wird, wenn die Abmessungen der einzelnen Komponenten an den Toleranzgrenzen liegen. Wie weiter aus Fig. 2 ersichtlich ist, ist ein erster radialer Abstand 8 der zweistufigen Tauchstufe 7 zwischen der ersten Kante 3.2 der Polkernstufe 3.1 und der ersten Kante 4.2 der Magnetankerstufe 4.1 kleiner als ein zweiter radialer Abstand 9 der zweistufigen Tauchstufe 7 zwischen der zweiten Kante 3.3 der Polkernstufe 3.1 und der zweiten Kante 4.3 der Magnetankerstufe 4.1 ausgeführt. Durch die axialen Überdeckungen 10, 11 wird eine kostengünstige Führung des beweglichen Magnetankers 4 bewirkt, die ein Verhaken des Magnetankers 4 mit dem Polkern 3 verhindert, wodurch die engen Toleranzanforderungen zur Erfüllung der Magnetkraft-Weg-Kennlinienbeeinflussung eingehalten werden können. Fig.. 3 zeigt eine schematische Darstellung einer Magnetkraft-Weg-Kennlinie 20 eines herkömmlichen Magnetventils, die gepunktet dargestellt ist, und eine schematische Magnetkraft-Weg-Kennlinie 30 des erfindungsgemäßen Magnetventils 1 mit einem zugehörigen Arbeitsbereich.

Das erfindungsgemäße Magnetventil 1 mit einer Tauchstufe bzw. Doppeltauchstufe ermöglicht eine kostengünstige Kennlinienbeeinflussung und kann beispielsweise zur Schlupfregelung in einer hydraulischen Bremsanlage für ein Kraftfahrzeug verwendet werden.

## Patentansprüche

1. Magnetventil mit einer Magnetbaugruppe, die zum Öffnen und/oder Schließen des Magnetventils (1) einen innerhalb einer Führungshülse (2) längsbeweglichen Magnetanker (4) entgegen der Kraft einer Rückstellfeder (6) gegen einen Polkern (3) bewegt, wobei der längsbewegliche Magnetanker (4) und der Polkern (3) jeweils eine Stufe (4.1, 3.1) aufweisen, die ineinander greifen und eine Tauchstufe (7) bilden, wobei, die Magnetankerstufe (4.1) und/oder die Polkernstufe (3.1) geometrisch so ausgelegt sind, dass während des Betriebs ein zusammengehörendes Kantenpaar (3.2, 4.2, 3.3, 4.3) der Magnetankerstufe (4.1) und der Polkernstufe (3.1) stets in Überdeckung (10, 11) zueinander stehen, um den beweglichen Magnetanker (4) beim Ineinandergreifen der Tauchstufe (7) zu führen, und wobei die Tauchstufe (7) zweistufig ausgeführt ist, **dadurch gekennzeichnet, dass** ein erster radialer Abstand (8) der zweistufigen Tauchstufe (7) zwischen einer ersten Kante (3.2) der Polkernstufe (3.1) und einer ersten Kante (4.2) der Magnetankerstufe (4.1) kleiner als ein zweiter radialer Abstand (9) der zweistufigen Tauchstufe (7) zwischen einer zweiten Kante (3.3) der Polkernstufe (3.1) und einer zweiten Kante (4.3) der Magnetankerstufe (4.1) ist.

2. Magnetventil nach Anspruch 1, **dadurch gekennzeichnet, dass** eine axiale Überdeckung (10, 11) zwischen der Magnetankerstufe (4.1) und der Polkernstufe (3.1) so ausgelegt ist, dass eine radiale Überdeckung vermeidbar ist.

3. Magnetventil nach Anspruch 2, **dadurch gekennzeichnet, dass** die axiale Überdeckung (10, 11) zwischen der Magnetankerstufe (4.1) und der Polkernstufe (3.1) so ausgeführt ist, dass die axiale Überdeckung (10, 11) über den vollständigen Bewegungsweg des Magnetankers (4) vorliegt.

4. Magnetventil nach Anspruch 1 oder 2, **dadurch gekennzeichnet, dass** ein radialer Abstand (8, 9) und/oder die axiale Überdeckung (10, 11) zwischen der Magnetankerstufe (4.1) und der Polkernstufe (3.1) in Abhängigkeit von Herstellungstoleranzen vorgebbar ist.

5. Hydraulische Bremsanlage für ein Kraftfahrzeug, **gekennzeichnet durch** ein Magnetventil (1) zur Schlupfregelung nach einem der Ansprüche 1 bis 4.

## Claims

1. Solenoid valve having a magnet assembly which, for the purpose of opening and/or closing the solenoid valve (1), moves a magnet armature (4), which can move in the longitudinal direction within a guide sleeve (2), towards a pole core (3) against the force of a return spring (6), with the magnet armature (4), which can move in the longitudinal direction, and the pole core (3) each having a stage (4.1, 3.1), these stages engaging one in the other and forming a plunger stage (7), with the magnet armature stage (4.1) and/or the pole core stage (3.1) being geometrically designed such that, during operation, an associated pair (3.2, 4.2, 3.3, 4.3) of edges of the magnet armature stage (4.1) and of the pole core stage (3.1) always form an overlap (10, 11) with respect to one another in order to guide the moving magnet armature (4) when it engages with the plunger stage (7), and with the plunger stage (7) being of two-stage form, **characterized in that** a first radial gap (8) of the two-stage plunger stage (7) between a first edge (3.2) of the pole core stage (3.1) and a first edge (4.2) of the magnet armature stage (4.1) is smaller than a second radial gap (9) of the two-stage plunger stage (7) between a second edge (3.3) of the pole core stage (3.1) and a second edge (4.3) of the magnet armature stage (4.1).

2. Solenoid valve according to Claim 1, **characterized in that** an axial overlap (10, 11) between the magnet armature stage (4.1) and the pole core stage (3.1) is designed such that a radial overlap can be avoided.

3. Solenoid valve according to Claim 2, **characterized in that** the axial overlap (10, 11) between the magnet armature stage (4.1) and the pole core stage (3.1) is formed such that the axial overlap (10, 11) is present over the entire movement path of the magnet armature (4).

4. Solenoid valve according to Claim 1 or 2, **characterized in that** a radial gap (8, 9) and/or the axial overlap (10, 11) between the magnet armature stage (4.1) and the pole core stage (3.1) can be prespecified as a function of manufacturing tolerances.

5. Hydraulic brake system for a motor vehicle, **characterized by** a solenoid valve (1) for slip control according to one of Claims 1 to 4.

## Revendications

1. Soupape magnétique dotée d'un module magnétique qui, pour ouvrir et/ou fermer la soupape magnétique (1), déplace un induit magnétique (4) coulissant longitudinalement à l'intérieur d'une douille de guidage (2) contre un noyau polaire (3) en opposition à la force d'un ressort de rappel (6),
l'induit magnétique (4) mobile longitudinalement et le noyau polaire (3) présentant des gradins respectifs (4.1, 3.1) qui s'engagent l'un dans l'autre et forment un gradin d'enfoncement (7),
le gradin (4.1) de l'induit magnétique et/ou le gradin (3.1) du noyau polaire ayant une forme géométrique telle qu'en fonctionnement, deux bords (3.2, 4.2, 3.3, 4.3) intégrés du gradin (4.1) de l'induit magnétique et du gradin (3.1) du noyau magnétique sont en permanence en superposition mutuelle (10, 11) pour guider l'induit magnétique mobile (4) lors de l'engagement du gradin d'enfoncement (7), le gradin d'enfoncement (7) étant double,
**caractérisée en ce que**
une première distance radiale (8) du gradin double d'enfoncement (7) entre un premier bord (3.2) du gradin (3.1) du noyau polaire et un premier bord (4.2) du gradin (4.1) de l'induit magnétique est plus petite qu'une deuxième distance radiale (9) du gradin double d'enfoncement (7) entre un deuxième bord (3.3) du gradin (3.1) du noyau polaire et un deuxième bord (4.3) du gradin (4.1) de l'induit magnétique.

2. Soupape magnétique selon la revendication 1, **caractérisée en ce que** la superposition axiale (10, 11) entre le gradin (4.1) de l'induit magnétique et le gradin (3.1) du noyau polaire est configurée de manière à pouvoir éviter une superposition radiale.

3. Soupape magnétique selon la revendication 2, **caractérisée en ce que** le recouvrement axial (10, 11) entre le gradin (4.1) de l'induit magnétique et le gradin (3.1) du noyau polaire est réalisé de telle sorte que le recouvrement axial (10, 11) soit formé sur tout le parcours de déplacement de l'induit magnétique (4).

4. Soupape magnétique selon les revendications 1 ou 2, **caractérisée en ce qu'**une distance radiale (8, 9) et/ou le recouvrement axial (10, 11) entre le gradin (4.1) de l'induit magnétique et le gradin (3.1) du noyau polaire peuvent être prédéterminés en fonction de tolérances de fabrication.

5. Installation hydraulique de freinage de véhicule automobile **caractérisée par** une soupape magnétique (1) de régulation du patinage selon l'une des revendications 1 à 4.
